# EUROPEAN PATENT SPECIFICATION

(11) **EP 0 947 381 B1**
(45) Date of publication and mention of the grant of the patent: **30.08.2006**
(21) Application number: 99105526.0
(22) Date of filing: 18.03.1999
(51) Int. Cl.: B60N 2/06

(54) **Longitudinal regulating device for vehicle seat**
Längsverstellvorrichtung für Kraftfahrzeugsitze
Dispositif de réglage longitudinal de sièges de véhicules

(30) Priority: 31.03.1998 IT TO980278
(43) Date of publication of application: 06.10.1999
(73) Proprietor: Gallo, Sergio, 12060 Verduno (Cuneo) (IT)
(72) Inventor: Gallo, Sergio, 12060 Verduno (Cuneo) (IT)
(74) Representative: Lotti, Giorgio

(56) References cited:
- EP-A- 0 812 721
- WO-A-97/10116
- US-A- 4 483 504
- US-A- 5 407 166
- US-A- 5 524 504

## Description

The present invention refers to a longitudinal regulating device for vehicle seats.

As is well-known, the front seats of modern vehicles are provided with means which permit the regulation of their position in a longitudinal direction. With this aim, in fact, a pair of parallel guides is firmly fixed to the understructure of the vehicle for each seat, these parallel guides function as supports and guides for a corresponding pair of mobile guides, which are fixedly connected to the seat itself.

Such regulating systems usually also comprise sliding means such as rollers and slide blocks, interposed between the fixed guides and the mobile guides to facilitate the movement of the seat, and blocking means to firmly secure the fixed guides to the mobile guides when regulation has been achieved.

An aim of the present invention is to realise a perfected kind of regulating device which permits the containment of vertical and transverse clearance of the guides; in some case, in fact, the fixed guides are not perfectly aligned on the same vertical plane as the mobile guides and to avoid sticking clearance is increased., but the person who occupies the seat suffers from an unpleasant sensation of instability. When there is too much clearance, noise is generated when the vehicle is being driven in the case that the passenger seat is not loaded down with the weight of a passenger; this noise is caused in part by vibrations at the coupling points of the guides with the relative interfaces (the structural framework of the seat itself and the release handle or lever).

For this and other aims and advantages, which will be better understood hereinafter, the present invention proposes the realisation of a device with the characteristics detailed in the independent claim 1 the preamble of which is disclosed in EP-0 490 313; other important characteristics are detailed in the subordinate claims.

There will now be described the structural and functional characteristics of a preferred but not limiting embodiment of the device according to the present invention; reference is made to the accompanying drawings, in which;
FIG. 1 is a perspective overall view of a device for regulating the longitudinal position of a vehicle seat;
FIG. 2 is a transverse sectional view along the line II-II of the device in FIG. 1, in which the elements of the present invention are visible.
FIGS.3 to 6 show a detailed illustration of some of the components of the device in FIGS. 1 and 2;

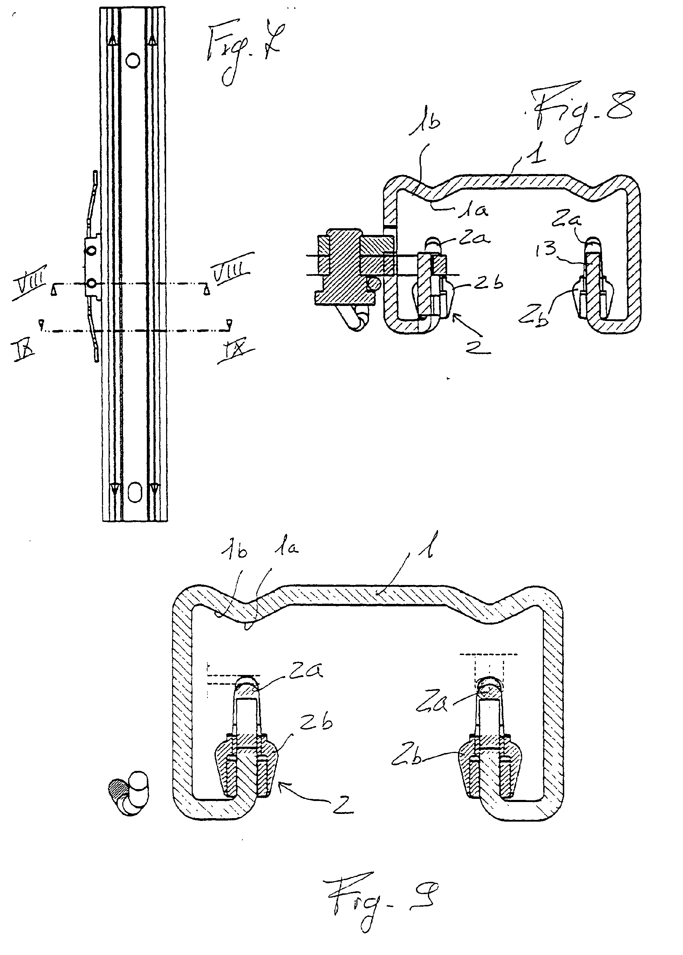

FIG. 7 is a lateral view of the device shown in FIG. 1; and
FIGS. 8 and 9 are sectional views along the lines VIII-VIII and IX-IX respectively as shown in FIG. 7.

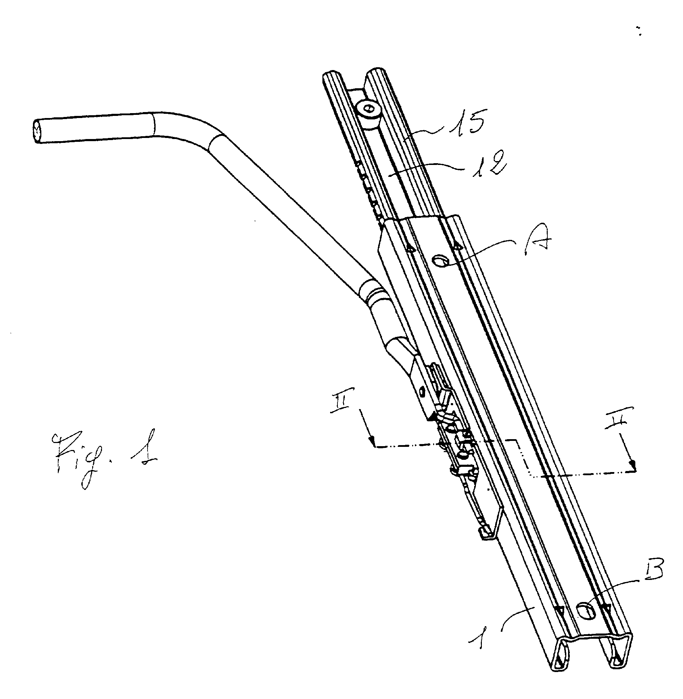

With initial reference to FIG. 1, the numbers 12 and 1 respectively indicate a fixed longitudinal guide and a mobile guide, formed of metallic profiles, preferably steel, and shaped and coupled in such a way as to be able to slide in a longitudinal direction. The fixed guide 12 is secured to the understructure (not illustrated) of the vehicle compartment by means of suitable fixing elements; similarly, the mobile guide is secured at the points A and B to the lower part of the structural framework of the vehicle seat (not illustrated) so that it is possible to regulate the longitudinal position of the seat inside the vehicle by making the upper mobile guides slide in relation to the lower fixed guides. For the sake of simplicity, only one pair of guides situated on one side of the vehicle seat is described and illustrated herein, it being understood that there another pair of identical guides is provided for on the other side of the vehicle seat.

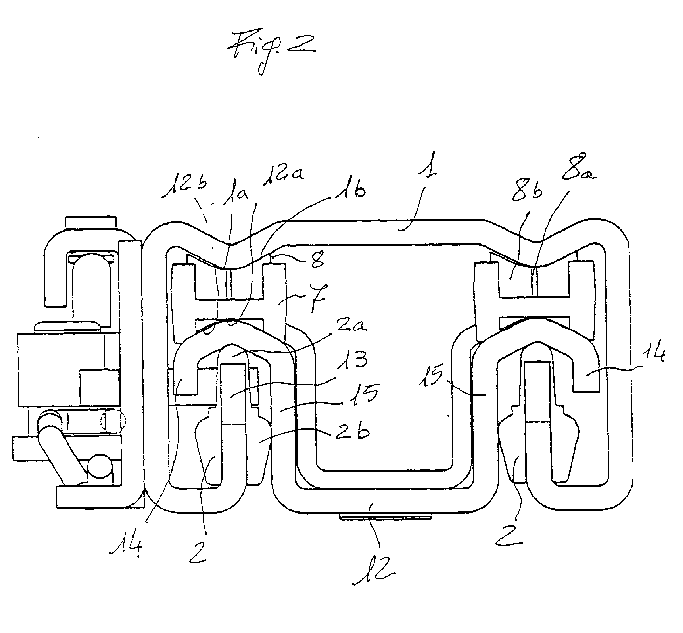

With reference to FIG. 2, the form of the guides 1 and 12 is shown in transverse section, of a well-known type and therefore not described in detail but only to such an extent as is necessary for the understanding of the present invention. The mobile guide 1 has a transverse section substantially in the shape of an upside down U; the edges 13 of the guide 1 are inwardly folded in a vertical direction so that they are thus contained on a longitudinal vertical plane delimited by the edges 14 of the fixed guide 12, which, instead, presents a transverse section in the shape of a U with its own edges 14 folded outwardly downwards.

The two guides 1, 12 respectively form a pair of longitudinal reliefs 1a, 12a facing each other and preferably of a bulbous form; each relief is defined by a pair of converging longitudinal surfaces 1b, 12b which are joined by a rounded edge to form said reliefs 1a and 12a.

The surfaces 1b, 12b of the guides serve as support surfaces as well as surfaces for the rolling action of two pairs of rollers 8 interposed between the mobile guides and the fixed guides with the aim of facilitating the sliding action of the mobile guides and thus the regulation of the position of the seat. With reference also to FIGS. 3, 4 and 5, each pair of rollers is mounted in a spacing element 7 at the terminal ends of which are formed pivotally connected lateral housings in which the rollers roll in such a way that, rolling on the guides, they are maintained at a constant distance along the entire range permitted by the guides. When accomplishing this movement, the spacers 7 slide between the guides without any appreciable friction.

The rollers 8 present a central cylindrical area of restricted diameter and two opposite tapered portions 8b which are more inclined in relation to the edges of the fixed guide and the mobile guide; this arrangement guarantees contact on the central cylindrical part of the roller only, while the tapering lateral parts always guarantee contact with both the fixed guide and the mobile guide even in the case that these are not perfectly aligned on the same vertical plane along their entire length. It is in fact possible that, due to errors in construction and/or assembly, one of the two guides may be found to be on a slightly displaced longitudinal plane in a transverse direction or may form an angle in relation to the plane of the other guide.

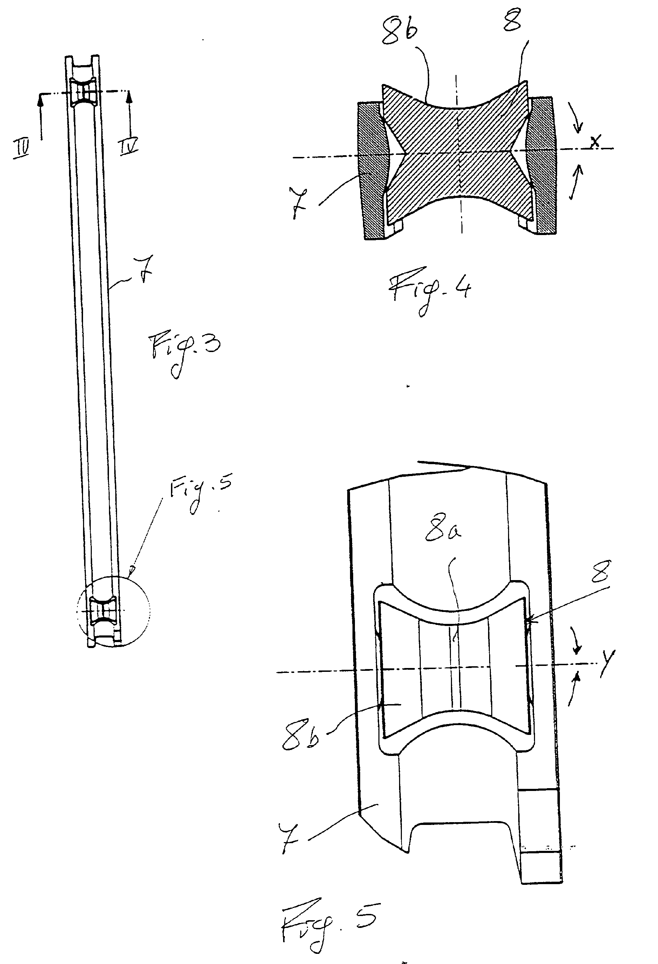

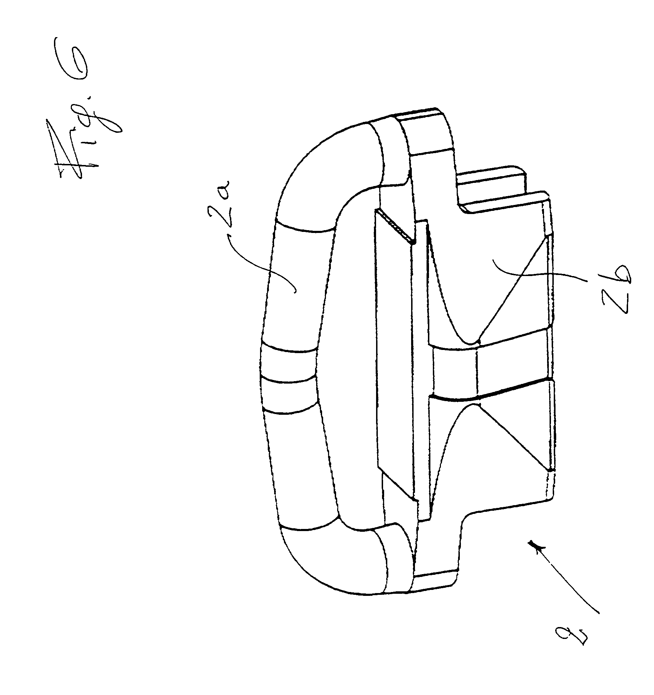

Each roller 8 can oscillate around the x axis (FIG. 4) adapting itself to the track on which it slides, having a curvature greater than that of the contact area of the guide. Oscillation of the rollers 8 is also possible around the y axis (FIG. 5) as the rollers are not rigidly mounted in their respective housings in the spacers 7.

In fact, as may be observed in FIGS. 4 and 5, the rollers 8 have a broader curvature in relation to the surfaces of the guides on which they roll, so that they can also slide in a slightly transverse direction in order to adapt to errors in construction and assembly of the guides and thus eliminate clearance.

With reference to FIGS. 2, 6, 8 and 9, the function of containing transverse clearance is vertical and is performed by a number of elastic slide blocks 2 made of elastically yieldable material, preferably 4 slide blocks to each pair of guides, which are snap fixed to the edges 13 of the mobile guide 1; in other words, on each edge 13 are fixed at least two elastic slide blocks 2, longitudinally spaced from each other.

Again with reference to FIGS. 2, 6, 8 and 9, each elastic slide block is arranged in such a way as to present an upper portion 2a extending in a vertical direction, and a lateral portion 2b extending in a transverse direction. The upper portion 2a is of a thickness such as to remain elastically compressed against the longitudinal recess 12c (which forms a surface lower than the surface 12b on which the rollers 8 roll) when the guides are coupled as illustrated in FIG. 2. In a similar way, the lateral portion 2b is of a thickness such as to remain elastically compressed against the vertical wall 15 of the fixed guide 12.

FIG. 9 shows the outline, on the left slide block, of the elastic oscillation in compression and, on the right slide block, the elastic oscillation under the lateral pressure to which the slide blocks are subjected when the device is in operation.

Other than centering the profiles of the mobile guide 1 in a lateral direction in relation to the fixed guide 12, the slide blocks 2 vertically load the mobile guide against the fixed guide, by means of the rollers 8, eliminating vertical clearance; as illustrated in FIG. 3, the compression of the upper part 2a of the slide block thrusts the mobile guide downwards in relation to the fixed guide, thus achieving the above-mentioned pre-load. In each of the mobile guides, the lateral portions 2b of the two slide blocks collaborate to compress the walls 15 in a transverse direction, eliminating transverse clearance.

This form of the slide blocks also guarantees a constant sliding load; furthermore, such a pre-load prevents the vehicle seat from oscillating due to vibrations, even in the case that the vehicle seat is without a passenger.

As can be appreciated, the characteristic form of the slide block 2, together with a certain flexibility in the outer edges 13 of the mobile guide 1, allow the realisation of guides with greater tolerance in comparison with traditional alternatives, with considerable advantages in terms of function and cost as far as the production of the guides is concerned.

While a specific embodiment of the invention has been disclosed, it is to be understood that such disclosure has been merely for the purpose of illustration and that the invention is not to be limited in any manner thereby. Modifications are possible in terms of the shape, dimensions and arrangements of the parts and of the constructional and operational details. The invention includes all modifications which fall within its scope, as defined by the following claims.

## Claims

1. A longitudinal regulating device for vehicle seats of the kind comprising a pair of fixed guides (12), fixedly connected to the understructure of the vehicle, and a pair of mobile guides (1), fixedly connected to the vehicle seat and able to slide along said fixed guides, where the fixed guide (12) presents a transverse section substantially in the shape of a U with edges (14) folded outwardly downwards to form surfaces (12b) for the rolling action of a number of rollers (8) interposed between fixed guide and mobile guide and a longitudinal recess (12c) suitable for longitudinally guiding and laterally containing vertically folded edges (13) of the mobile guide (1); on each of the said edges (13) of the mobile guide being fixed a number of slide blocks (2), longitudinally spaced from each other and comprising; first elastically yieldable means (2a) suitable for remaining elastically compressed in a vertical direction against a first surface (12c) of the fixed guide to eliminate vertical clearance between the guides; and second elastically yieldable means (2b) suitable for remaining elastically compressed against a second surface (15) of the fixed guide (12) to eliminate transverse clearance between the guides (1, 12);
**characterised by** the fact that said rollers (8) present: a central cylindrical area (8a) suitable for rolling on said longitudinal relief (12b), and two opposite tapering portions (8b) with a greater inclination with regard to the sides of said longitudinal relief (12b) said central portion (8a) also being of a length such as to permit a slight transverse slide of the roller (8) with regard to said longitudinal relief (12b).

2. A device according to Claim 1,
**characterised by** the fact that said first elastically yieldable means (2a) are dimensioned in such a way as to vertically pre-load the mobile guide against the fixed guide by means of said rollers (8).

3. A device according to Claim 1,
**characterised by** the fact that the rollers (8) are mounted in a spacing element (7) interposed in its turn between the rollers (8) themselves and the fixed guide (12); the terminal ends of the spacers being provided with horizontally pivotally connected lateral housings in which the rollers are rotatably mounted so that they can oscillate with regard to the axes (x, y), substantially orthogonal between them, in order to adapt to the sliding surfaces even in the case that errors of forming should occur.

## Patentansprüche

1. Vorrichtung zur Einstellung in Längsrichtung von Fahrzeugsitzen der Art, die ein Paar feststehender Führungen (12) umfassen, die mit dem Unterbau des Fahrzeuges fest verbunden sind, und ein Paar beweglicher Führungen (1), die mit dem Fahrzeugsitz fest verbunden und in der Lage sind, entlang der genannten feststehenden Führungen zu gleiten, wobei die feststehende Führung (12) einen Querschnitt im Wesentlichen in Form eines U mit auswärts und abwärts gefalteten Kanten (14) aufweist, um Rollflächen (12b) für eine Anzahl von Rollen (8) zu bilden, die zwischen feststehende und bewegliche Führung eingesetzt werden, und einen Rücksprung in Längsrichtung (12c), der zur Führung in Längsrichtung und seitlichen Aufnahme vertikal gefalteter Kanten (13) der beweglichen Führung geeignet ist, wobei an jeder der genannten Kanten (13) der beweglichen Führung eine Anzahl Gleitblöcke (2) befestigt sind, die in Längsrichtung voneinander beabstandet sind und umfassen: erste elastisch nachgiebige Mittel (2a), geeignet, in einer Vertikalrichtung gegen eine erste Fläche (12c) der feststehenden Führung gedrückt gehalten zu werden, um vertikales Spiel zwischen den Führungen zu beseitigen, und zweite elastisch verformbare Mittel (2b), die geeignet sind, gegen eine zweite Oberfläche (15) der feststehenden Führung (12) elastisch gedrückt gehalten zu werden, um Spiel in Querrichtung zwischen den Führungen (1, 12) zu beseitigen, **dadurch gekennzeichnet, dass** die genannten Rollen (8) aufweisen: einen zentralen zylindrischen Bereich (8a), geeignet, auf der genannten Längsaussparung (12b) zu rollen, und zwei einander entgegengesetzt angeordnete konische Abschnitte (8b) mit einer größeren Neigung gegenüber den Seiten der genannten Längsaussparung (12b), wobei der genannte zentrale Abschnitt (8a) auch eine geeignete Länge hat, um ein geringfügiges Gleiten der Rollen (8) relativ zum genannten Längsrelief (12b) zuzulassen.

2. Vorrichtung nach Patentanspruch 1, **dadurch gekennzeichnet, dass** die genannten ersten elastisch verformbaren Mittel (2a) derart dimensioniert sind, dass die bewegliche Führung gegen die feststehende Führung mit Hilfe der genannten Rollen (8) vertikal vorgespannt wird.

3. Vorrichtung nach Patentanspruch 1, **dadurch gekennzeichnet, dass** die Rollen (8) in einem Beabstandungsteil (7) montiert sind, das seinerseits zwischen den Rollen (8) selbst und der feststehenden Führung (12) eingefügt ist, wobei die Enden der Beabstandungsteile mit horizontal schwenkbar befestigten seitlichen Gehäusen versehen sind, in denen die Rollen drehbar montiert sind, so dass sie relativ zu den Achsen (x, y), im Wesentlichen senkrecht zwischen diesen, schwingen können, um sich an die Gleitflächen auch in dem Fall anpassen zu können, dass Formungsfehler auftreten sollten.

## Revendications

1. Dispositif de régulation longitudinal pour sièges de véhicule du genre comprenant une paire de guides fixes (12), raccordés fixement au soubassement du véhicule, et une paire de guides mobiles (1), raccordés fixement au siège du véhicule et pouvant coulisser le long desdits guides fixes, où le guide fixe (12) présente une section transversale sensiblement de la forme d'un U avec des arêtes (14) pliées vers l'extérieur et vers le bas pour former des surfaces (12b) permettant l'action de roulage de nombreux rouleaux (8) interposés entre le guide fixe et le guide mobile et un logement longitudinal (12c) approprié pour guider longitudinalement et contenir latéralement des arêtes pliées verticalement (13) du guide mobile (1) ; sur chacune desdites arêtes (13) du guide mobile étant fixés de nombreux blocs coulissants (2), espacés longitudinalement les uns des autres et comprenant; premièrement des moyens déformables élastiquement (2a) appropriés pour rester compressés élastiquement dans une direction verticale contre une première surface (12c) du guide fixe pour éliminer l'écartement vertical entre les guides ; et deuxièmement des moyens déformables élastiquement (2b) appropriés pour rester compressés élastiquement contre une seconde surface (15) du guide fixe (12) pour éliminer l'écartement transversal entre les guides (1, 12) ;
**caractérisé par le fait que** lesdits rouleaux (8) présentent : une zone cylindrique centrale (8a) appropriée pour le roulage sur ledit relief longitudinal (12b), et deux parties coniques opposées (8b) avec une inclinaison plus grande par rapport aux côtés dudit relief longitudinal (12b), ladite partie centrale (8a) étant également d'une longueur permettant une légère coulisse transversale du rouleau (8) par rapport audit relief longitudinal (12b).

2. Dispositif selon la revendication 1, **caractérisé par le fait que** lesdits premiers moyens déformables élastiquement (2a) sont dimensionnés d'une façon telle à précharger verticalement le guide mobile contre le guide fixe au moyen desdits rouleaux (8).

3. Dispositif selon la revendication 1, **caractérisé par le fait que** les rouleaux (8) sont montés dans un élément d'espacement (7) interposé à son tour entre les rouleaux (8) eux-mêmes et le guide fixe (12) ; les extrémités terminales des entretoises étant munies de boîtiers latéraux connectés horizontalement et de façon pivotante dans lesquels les rouleaux sont montés de manière à pouvoir tourner de sorte qu'ils peuvent osciller par rapport aux axes (x, y), sensiblement orthogonaux entre eux, afin de s'adapter aux surfaces coulissantes même au cas où des erreurs de formation se produiraient.
